# EUROPÄISCHE PATENTANMELDUNG

(11) **EP 4 104 920 A1**
(43) Veröffentlichungstag der Anmeldung: **21.12.2022**
(21) Anmeldenummer: 22173721.6
(22) Anmeldetag: 17.05.2022
(51) Int. Cl.: B01J 2/00, B01J 2/12, A61J 3/00

(54) **TROMMELCOATERVORRICHTUNG ZUR BESCHICHTUNG VON TABLETTEN**

(30) Priorität: 18.06.2021 DE 102021115831
(71) Anmelder: Hüttlin GmbH, 79650 Schopfheim (DE)
(72) Erfinder: Pfanstiel, Christopher, 79618 Rheinfelden (DE); Warr, Ian, 79541 Lörrach (DE); Zerrer, Norbert, 79650 Schopfheim (DE)
(74) Vertreter: DREISS Patentanwälte PartG mbB

(57) **Zusammenfassung**

Die Erfindung betrifft eine Trommelcoatervorrichtung (10) zur Beschichtung von Tabletten, umfassend eine um eine Drehachse (20) drehbare Mischtrommel (18) mit einem Innenraum (24) zur Anordnung einer zu beschichtenden Tablettencharge, ferner umfassend eine Sprühvorrichtung zum Einbringen eines Beschichtungsmaterials in den Innenraum, wobei die Mischtrommel eine hohlzylindrische, perforierte Wandung aufweist, welche zumindest einen Teil des Innenraums der Mischtrommel begrenzt, wobei an der dem Innenraum zugewandten Innenseite der Wandung Mischelemente zur Durchmischung der Tabletten einer Tablettencharge angeordnet sind, wobei Paare (36) von Mischelementen (34a, 34b) zueinander V-förmig ausgerichtete Schenkel bilden, wobei sich der Abstand der Schenkel eines Paars von einem längs der Drehachse gesehen zentralen Ringbereich der Wandung in Richtung auf zu dem zentralen Ringbereich benachbarte seitliche Ringbereiche erweitert.

## Beschreibung

Die Erfindung betrifft eine Trommelcoatervorrichtung zur Beschichtung von Tabletten, umfassend eine um eine Drehachse drehbare Mischtrommel mit einem Innenraum zur Anordnung einer zu beschichtenden Tablettencharge, ferner umfassend eine Sprühvorrichtung zum Einbringen eines Beschichtungsmaterials in den Innenraum, wobei die Mischtrommel eine hohlzylindrische, perforierte Wandung aufweist, welche zumindest einen Teil des Innenraums der Mischtrommel begrenzt, wobei an der dem Innenraum zugewandten Innenseite der Wandung Mischelemente zur Durchmischung der Tabletten einer Tablettencharge angeordnet sind, gemäß WO 2006/109173 A2.
Eine Trommelcoatervorrichtung oder auch kurz Trommelcoater (engl. Pan Coater oder Drum Coater) oder Tablettencoater (engl. Tablet Coater) dient zur homogenen Durchmischung von Tabletten innerhalb einer sich drehenden, hohlzylindrischen Wandung. Eine solche Wandung ist an ihren Seiten üblicherweise durch kegelstumpfförmige Begrenzungsflächen begrenzt, wobei eine der Begrenzungsflächen in einem zentralen Bereich offen ist, um einen Zugang zu dem Innenraum der Mischtrommel zu ermöglichen.

Während eines Mischvorgangs dreht sich die Mischtrommel, wobei die Tabletten einer Tablettencharge an der Innenseite der Wandung der Mischtrommel abwälzen, wobei sich ein Tablettenbett einstellt, das einen zu einer Horizontalen geneigten Tablettenspiegel aufweist.

Üblicherweise unterhalb des höchsten Niveaus eines solchen Tablettenbetts befindend sich eine Sprühzone, in welcher eine Sprühvorrichtung ein Beschichtungsmaterial auf die Tabletten sprüht. Bei dem Beschichtungsmaterial handelt es sich bspw. um ein Gas-Feststoff-Gemisch, insbesondere um einen Lack oder einen Wirkstoff.

Die Wandung der Mischtrommel ist perforiert, damit trockene Luft von außen zugeführt und in den Innenraum der Mischtrommel eingebracht werden kann, zwecks Trocknung des auf die Tabletten einer Tablettencharge aufgesprühten Beschichtungsmaterials.

Nach und nach bildet sich somit eine durchgängige Oberflächenschicht, die bspw. eine Geschmacksmaskierung von Wirkstoffen, eine vereinfachte Einnahme der Tabletten, einen Zuckerüberzug oder ein sogenanntes Enteric-Coating (gezielte Freisetzung von Wirkstoffen) ermöglicht.

Idealerweise können alle Tabletten einer Tablettencharge mit einer zueinander identischen Beschichtung versehen werden. Hierzu bedarf es einer sorgfältigen Abstimmung der Sprüh- und Trocknungsvorgänge und insbesondere einer homogenen Durchmischung aller Tabletten einer Tablettencharge.

Um eine möglichst gleichmäßige Durchmischung aller Tabletten einer Tablettencharge zu ermöglichen, sind Mischelemente vorgesehen, welche als Schaufeln, Mitnehmer oder Barrieren auf der Innenseite der Wandung der Mischtrommel, ggf. auch an den Innenseiten der Begrenzungsflächen, angeordnet sind. Diese Mischelemente versetzen das Tablettenbett immer wieder neu in Bewegung.

Es besteht jedoch das Problem, dass die Mischelemente üblicherweise auf eine ganz bestimmte Größe einer Tablettencharge ausgelegt sind. Sind die Mischelemente für eine große Tablettencharge zu niedrig, findet eine nur unzureichende Durchmischung statt. Sind die Mischelemente für eine kleine Tablettencharge zu hoch, stehen diese über den Spiegel eines Tablettenbetts hervor und nehmen temporär Beschichtungsmaterial auf, das sich aber ablösen kann, wodurch die Beschichtungsgüte leidet.

Hiervon ausgehend liegt der vorliegenden Erfindung die Aufgabe zugrunde, eine Trommelcoatervorrichtung anzugeben, welche für unterschiedlich große Tablettenchargen geeignet ist.

Diese Aufgabe wird bei einer Trommelcoatervorrichtung der eingangs genannten Art dadurch gekennzeichnet, dass Paare von Mischelementen zueinander V-förmig ausgerichtete Schenkel bilden, wobei sich der Abstand der Schenkel eines Paars von einem längs der Drehachse gesehen zentralen Ringbereich der Wandung in Richtung auf zu dem zentralen Ringbereich benachbarte seitliche Ringbereiche erweitert.

Die V-förmig ausgerichteten Schenkel eines Paars von Mitnehmern bilden an der Wandung der Mischtrommel und in dem zentralen Ringbereich einen Trichterbereich aus, in welchem sich die in einem Tablettenbett weiter unten angeordneten Tabletten sammeln und auf diese Weise den Tablettenspiegel in diesem Bereich in Form einer Anhäufung erhöhen. Bei einem durch Drehung der Mischtrommel bedingten Weitertransport dieser Anhäufung hat diese - bedingt durch die Gewichtskraft - die Tendenz, sich wieder abzuflachen. Hierdurch werden die oberen Tabletten des Tablettenbetts in Richtung der seitlichen Ringbereiche transportiert. Von dort aus gelangen die Tabletten (also im Prinzip auf der - in Laufrichtung des Umfangs der Innenseite gesehen - "Rückseite" eines ersten Paars von V-förmig ausgerichteten Schenkeln und der "Vorderseite" eines dem ersten Paar in Laufrichtung folgenden zweiten Paars von V-förmig ausgerichteten Schenkeln) wieder in den zentralen

Ringbereich und sinken dabei in den unteren Bereich des Tablettenbetts ab.

Auf diese Weise entstehen beidseits einer zentralen Ringebene zwei spiralförmige Tabletten-Transportpfade, welche sowohl eine Durchmischung der Tabletten sowohl von unten nach oben und zurück als auch von innen nach außen und zurück bewirken. Zusätzlich findet in dem zentralen Ringbereich ein Austausch von Tabletten unterschiedlicher Tabletten-Transportpfade statt. Dieses Durchmischungsprinzip sorgt nicht nur für eine besonders homogene Durchmischung der Tabletten, sondern funktioniert insbesondere auch bei unterschiedlich großen Tablettenchargen.

Vorzugsweise sind die in dem zentralen Ringbereich angeordneten Enden der Schenkel zumindest eines Paars (also jene Enden der Schenkel eines Paars, welche den kleinsten Abstand zueinander haben) zueinander beabstandet. Im Bereich dieses Abstands wird ein offener Korridor für den Tablettenfluss geschaffen, der einen vorzeitigen Transport der unteren Tabletten des Tablettenbetts aus diesem Bereich heraus verhindert. Ein solcher Transport der Tabletten ginge damit einher, dass Tabletten eine obere Mischkante eines Mischelements überwinden, bevor diese Tabletten den oberen Teil des spiralförmigen Transportpfads erreichen.

Die genannte Beabstandung der Enden der Schenkel hat den weiteren Vorteil, dass ein prinzipbedingter mechanischer Abrieb zwischen den Tabletten auf ein Minimum reduziert werden kann. Dies trägt zu einer schonenden und effizienten Beschichtung der Tabletten bei.

Es ist ferner bevorzugt, wenn ein Schenkel oder beide Schenkel zumindest eines Paars fragmentiert ist oder sind und längs einer Schenkelachse gesehen mindestens zwei zueinander beabstandete Mischelemente aufweist oder aufweisen. Im Bereich eines Abstands zwischen zwei Mischelementen desselben Schenkels können Tabletten also in Kontakt mit der Wandung der Mischtrommel treten. Auf diese Weise entstehen in Umfangsrichtung der Wandung gesehen zusätzliche Mischpfade, auch unter Austausch von Tabletten der vorstehend erläuterten spiralförmigen Transportpfade.

Es ist ferner bevorzugt, wenn die Mischelemente oder eine Teilmenge von Mischelementen zumindest eines Paars jeweils eine der Drehachse zugewandte, relativ zu der Wandung geneigte Mischkante aufweisen. Auf diese Weise variiert die Höhe eines Mischelements entlang des Verlaufs eines Mischelements variiert, so dass - bezogen auf einen gedachten, horizontalen Tablettenspiegel - Tablettenmengen über unterschiedliche Höhen hinweg an der Wandung der Mischtrommel mitgenommen und in Bewegung versetzt werden können.

Insbesondere weist die Mischkante - von dem zentralen Ringbereich in Richtung eines seitlichen Ringbereichs gesehen - entlang ihres Verlaufs einen zu der Wandung zunehmend größeren Abstand auf. Dies bedeutet, dass die Mischkante in dem zentralen Ringbereich oder in einem dem zentralen Ringbereich zugewandten Abschnitt der Mischkante einen kleineren Abstand zu der Wandung der Mischtrommel aufweist als in einem seitlichen Ringbereich oder in einem einem seitlichen Ringbereich zugewandten Abschnitt der Mischkante. Hierdurch wird die vorstehend erläuterte Anhäufung von Tabletten in dem zentralen Ringbereich unterstützt.

Es ist möglich, dass ein Anteil von mindestens 10% und/oder höchstens 75% des Umfangs der Innenseite der Wandung von Mischelementen überdeckt ist. Der Anteil der Überdeckung kann aber auch bis zu 100% betragen.

Bevorzugt ist es ferner, wenn die Mischelemente relativ zu der Innenseite der Wandung einen Anstellwinkel aufweisen, der zwischen 60° und 90° beträgt. Bei einem Anstellwinkel von 90° erstrecken sich die Mischelemente also senkrecht zu der Innenseite der Wandung; durch Wahl eines anderen Anstellwinkels können die Verläufe der Tabletten-Transportpfade beeinflusst werden.

Bevorzugt ist es ferner, wenn die Mischelemente eine Höhe aufweisen, welche zwischen 1% und 30% des Innendurchmessers der Wandung beträgt. Diese Werte ermöglichen die zuverlässige Ausbildung von mindestens zwei spiralförmigen Tabletten-Transportpfaden.

Vorzugsweise sind die Mischelemente bezogen auf eine zu der Drehachse parallele Achse um einen Winkel geneigt angeordnet, der zwischen 15° und 60° beträgt. Mit diesen Werten lassen sich Tablettenchargen unterschiedlicher Größe homogen durchmischen.

Schließlich ist es bevorzugt, dass ein Innendurchmesser der Wandung mindestens das 0,4-fache der Breite der Wandung beträgt. Auch dieser Parameter trägt zu einer homogenen Durchmischung von Tabletten einer Tablettencharge bei.

Weitere Merkmale und Vorteile der Erfindung sind Gegenstand der nachfolgenden Beschreibung und der zeichnerischen Darstellung bevorzugter Ausführungsbeispiele.

In der Zeichnung zeigt:
Fig. 1 eine perspektivische, teilgeschnittene Ansicht einer Trommelcoatervorrichtung, mit einer Mischtrommel;
Fig. 2 eine perspektivische Ansicht der Mischtrommel;
Fig. 3 eine der Fig. 2 entsprechende Ansicht in einer teiltransparenten Darstellung;
Fig. 4 eine perspektivische Ansicht eines hohlzylindrischen Teils der Mischtrommel;
Fig. 5 eine schematische Darstellung einer Abwicklung des hohlzylindrischen Teils;
Fig. 6 eine schematische Seitenansicht der Mischtrommel;
Fig. 7 eine schematische Vorderansicht der Mischtrommel während eines Betriebs der Trommelcoatervorrichtung; und
Fig. 8 und 9 der Fig. 6 entsprechende Ansichten der Mischtrommel während des Betriebs der Trommelcoatervorrichtung.

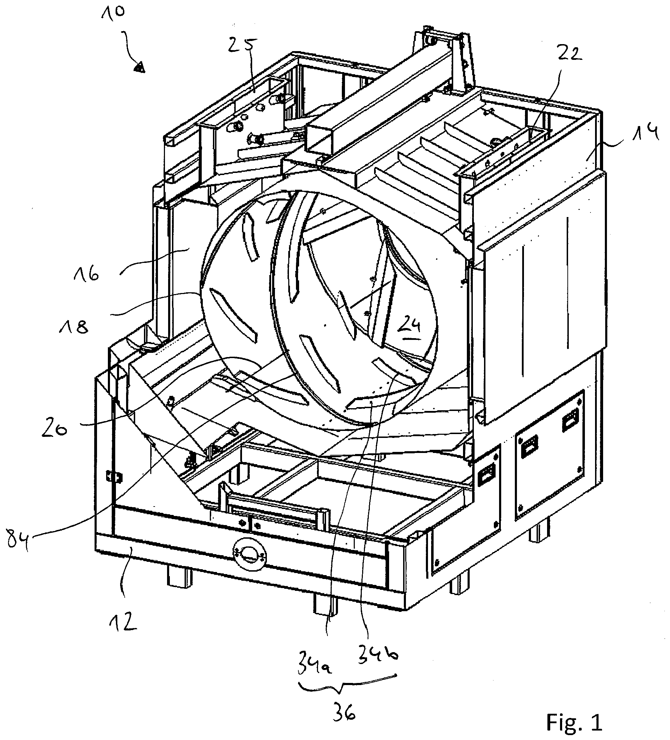

Eine in Figur 1 dargestellte Ausführungsform einer Trommelcoatervorrichtung ist insgesamt mit dem Bezugszeichen 10 bezeichnet. Die Vorrichtung 10 umfasst ein Gestell 12, auf welchem ein Gehäuse 14 angeordnet ist.

Das Gehäuse 14 begrenzt einen Trommelraum 16 zur Anordnung einer Mischtrommel 18, welche um eine Drehachse 20 drehbar ist. Die Drehachse 20 entspricht der zentralen Achse der Mischtrommel 18 und ist horizontal orientiert. Zum Drehantrieb der Mischtrommel 18 ist ein an sich bekannter und daher nicht dargestellter Drehantrieb vorgesehen.

Die Vorrichtung 10 umfasst einen Zuluftanschluss 22 zur Zuführung von trockener Prozessluft in den Trommelraum 16, von welchem aus die Prozessluft in den Innenraum 24 der Mischtrommel 18 gelangt.

Feuchte Abluft gelangt von dem Innenraum 24 der Mischtrommel 18 zu einem Abluftanschluss 25.

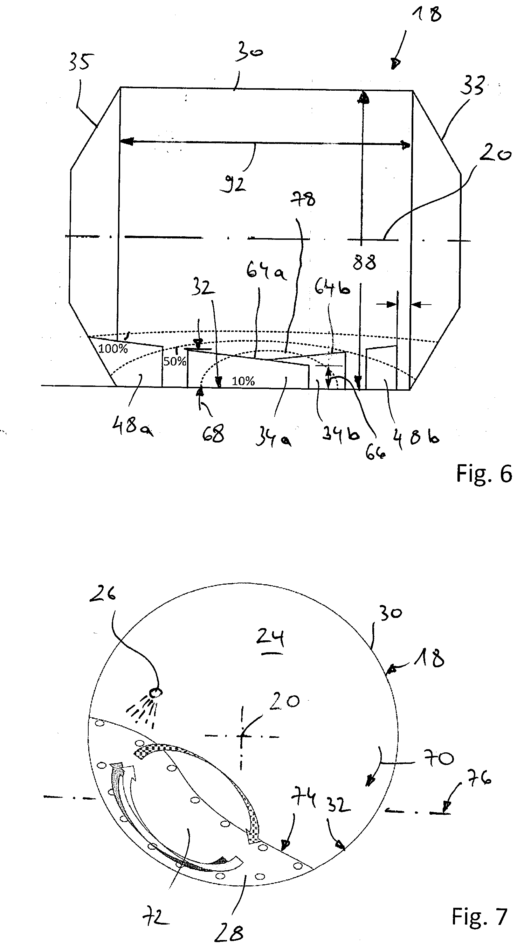

Die Vorrichtung 10 umfasst ferner eine Sprühvorrichtung, welche schematisch in Figur 7 dargestellt und in dem Innenraum 24 der Mischtrommel 18 angeordnet ist. Die Sprühvorrichtung 26 umfasst beispielsweise eine Sprühlanze und dient zum Einbringen eines Beschichtungsmaterials für Tabletten einer in dem Innenraum 24 der Mischtrommel 18 angeordneten Tablettencharge 28.

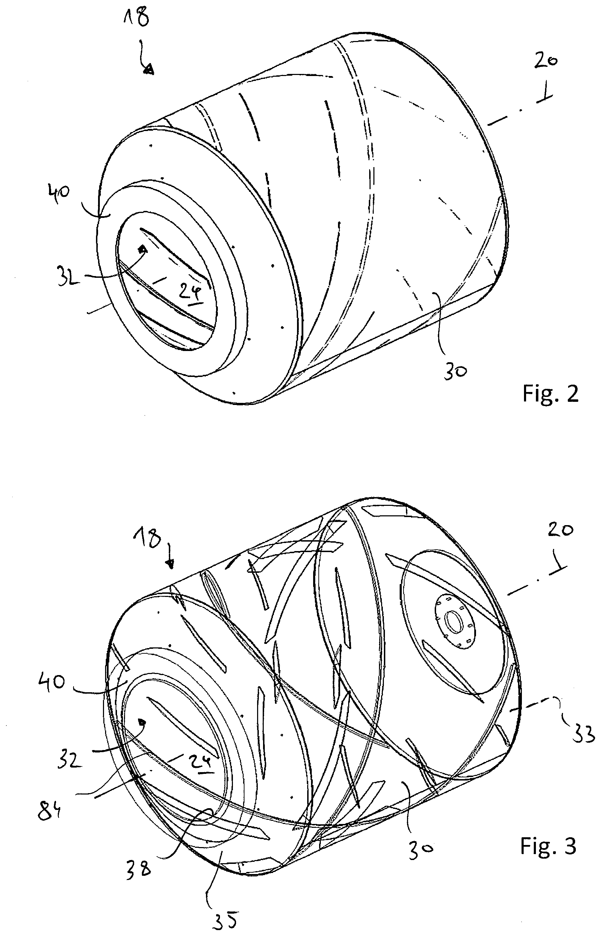

Der Aufbau der Mischtrommel 18 wird nachfolgend unter Bezugnahme auf die Figuren 2 bis 4 beschrieben.

Die Mischtrommel 18 weist eine hohlzylindrische Wandung 30 auf. Die Wandung 30 weist eine dem Innenraum 24 zugewandte Innenseite 32 auf. Die Wandung 30 ist perforiert, damit trockene Prozessluft in den Innenraum 24 eingeführt und feuchte Abluft abgeführt werden kann.

Die Mischtrommel 18 ist im Bereich einer Rückseite durch eine geschlossene Begrenzungsfläche 33 begrenzt. Im Bereich einer Vorderseite ist die Mischtrommel 18 durch eine Begrenzungsfläche 35 begrenzt, welche eine zentrale Öffnung 38 aufweist, welche mittels einer Tür 40 verschlossen und geöffnet werden kann.

Die Begrenzungsflächen 33 und 35 können eine Kegelstumpfform aufweisen, so dass sie den Innenraum 24 längs der Drehachse 20 kegelstumpfförmig erweitern.

An der Innenseite 32 der Wandung 30 sind Mischelemente angeordnet, welche sich jeweils stegförmig über die Innenseite 32 der Wandung 30 erheben und Richtung auf die Drehachse 20 zu von der Innenseite 32 abragen.

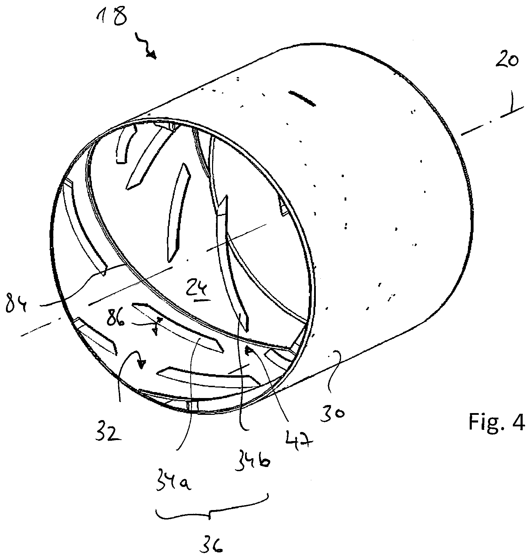

In Figur 4 sind zwei Mischelemente beispielhaft mit den Bezugszeichen 34a und 34b bezeichnet. Diese Mischelemente bilden gemeinsam ein Paar 36 von Mischelementen mit zueinander V-förmig ausgerichteten Schenkeln.

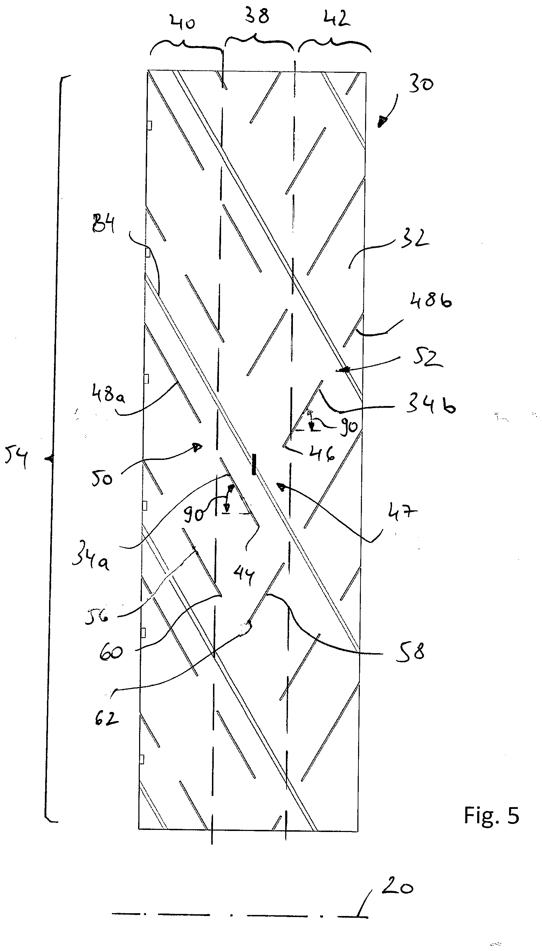

Die beiden Mischelemente 34a und 34b sind auch in der Abwicklung der Innenseite 32 der Wandung 30 der Mischtrommel 18 dargestellt, vergleiche Figur 5. Dort ist auch die Orientierung der Drehachse 20 eingezeichnet. Senkrecht zu der Drehachse 20 und entlang des Umfangs 54 der Innenseite 32 verlaufen drei Ringbereiche, nämlich ein zentraler Ringbereich 38 und dazu benachbart jeweils äußere, seitliche Ringbereiche 40 und 42.

Die beiden Mischelemente 34a und 34b weisen einander zugewandte Enden 44 bzw. 46 auf, welche in einem Zwischenraum 47 zueinander beabstandet sind.

Die beiden Mischelemente 34a und 34b sind jeweils Teil von Schenkeln einer V-förmigen Anordnung. Die Schenkel dieser Anordnung sind durch weitere Mischelemente 48a und 48b gebildet, welche die V-förmige Konfiguration der beiden Mischelemente 34a und 34b jeweils verlängern. Entlang eines Schenkels dieser V-förmigen Anordnung gesehen sind die Mischelemente eines Schenkels, beispielsweise die Mischelemente 34a und 48a, in einem Abstandsbereich 50 zueinander beabstandet. Die Mischelemente 34b und 48b des anderen Schenkels desselben Paars 36 sind in einem Abstandsbereich 52 zueinander beabstandet.

Über den Umfang 54 der Innenseite 32 hinweg einander folgend sind weitere Paare 36 von Mischelementen angeordnet, welche eine Anordnung mit V-förmigen Schenkeln bilden. Zwei Mischelemente, welche die Schenkel eines weiteren Paars 36 bilden, sind in Figur 5 beispielhaft mit den Bezugszeichen 56 und 58 bezeichnet.

Die jeweils einander zugewandten Enden der Mischelemente 56 und 58 sind mit den Bezugszeichen 60 und 62 bezeichnet. In einer Richtung parallel zu der Drehachse 20 gesehen sind die Enden 44, 46, 60, 62 verschiedener Mischelemente 34a, 34b, 56, 58 zueinander versetzt angeordnet. Hierdurch wird eine Asymmetrie erzeugt, welche eine vollständige und homogene Durchmischung der Tabletten einer Tablettencharge 28 unterstützt.

Eine Teilmenge der Mischelemente ist in Figur 6 dargestellt. Die Mischelemente 34a und 34b weisen jeweils eine Mischkante 64a bzw. 64b auf, welche in dem zentralen Ringbereich (vergleiche Figur 5) einen kleineren Abstand 66 zu der Innenseite 32 der Wandung 30 haben als weiter seitlich in den äußeren Ringbereichen 40 und 42 (vergleiche Figur 5), dort mit einem im Vergleich zu dem kleineren Abstand 66 größeren Abstand 68.

Während des Mischvorgangs dreht sich die Mischtrommel 18 um die Drehachse 20, beispielsweise im Uhrzeigersinn in einer Misch-Drehrichtung 70, vergleiche Figur 7. Die Drehung der Mischtrommel 18 und die Interaktion der Mischelemente mit den Tabletten der Tablettencharge 28 von Tabletten führen dazu, dass sich ein Tablettenbett 72 ausbildet, welches einen Tablettenspiegel 74 aufweist, der zu einer gedachten Horizontalen 76 geneigt ist.

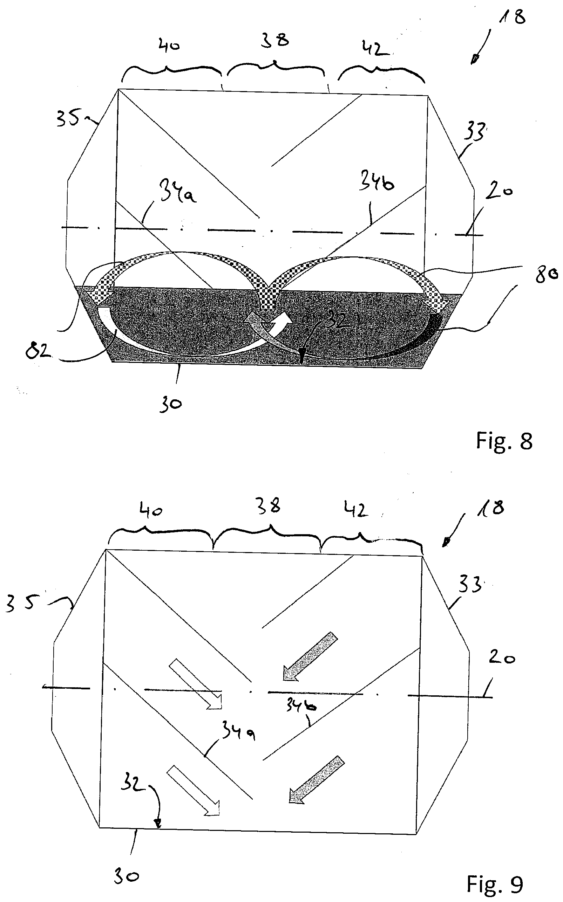

Bedingt durch die V-förmige Anordnung der Mischelemente (beispielsweise der Mischelemente 34a und 34b) bildet sich in dem zentralen Ringbereich 38 eine Anhäufung, welche in Figur 6 beispielhaft mit dem Bezugszeichen 78 bezeichnet ist. Während der Drehung der Mischtrommel 18 gelangen die Tabletten aufgrund der V-förmigen Anordnung der Mischelemente 34a und 34b in den zentralen Ringbereich 38, vergleich Figur 9.

Während des Transports innerhalb einer Anhäufung 78 (vergleiche Figuren 6 und 7) werden die Tabletten einer unteren Tablettenschicht in dem zentralen Ringbereich 38 entlang der Wandung 30 nach oben transportiert (in Figur 7 ausgehend von ca. 6 Uhr auf ca. 8 bis 9 Uhr). Dort drücken diese Tabletten der unteren Tablettenschicht die Tabletten einer oberen Tablettenschicht nach außen in die seitlichen Ringbereiche 40, 42, vergleiche Figur 8. Dort rollen die Tabletten der oberen Tablettenschicht ab und gelangen wieder in den zentralen Ringbereich 38, vergleiche Figur 9, wobei diese Tabletten der vormals oberen Tablettenschicht nach unten gefördert werden und somit eine neue "untere Tablettenschicht" bilden, welche auf ihrem weiteren Transportpfad die vormals untere Tablettenschicht nach außen drückt, sodass die vormals untere Tablettenschicht dann eine obere Tablettenschicht bildet.

Insgesamt entstehen zwei spiralförmige Tabletten-Transportpfade, welche in Figur 8 mit dem Bezugszeichen 80 und 82 bezeichnet sind.

Das vorstehend erläuterte Durchmischungsprinzip ist unabhängig davon, ob es sich bei der Tablettencharge 28 um eine kleine Charge mit einer Befüllung von beispielsweise 10% der Mischtrommel 18 handelt, oder aber ob die Tablettencharge 28 größer ist, vergleiche beispielhaft dargestellte Befüllungsgrade von 50% und 100% in Figur 6. Je höher der Befüllungsgrad, desto flacher (weniger stark gekrümmt) ist das Profil des sich einstellenden Tablettenbetts 72.

Für eine abschließende vollständige Entleerung der Mischtrommel 18 ist es vorteilhaft, dass beispielsweise die Mischelemente 34a, 34b eines Paars 36 in dem Zwischenraum 47 zueinander beabstandet sind. Dieser Zwischenraum 47 ermöglicht die Anordnung einer wulstförmige Erhöhung 84, welche spiralförmig entlang der Innenseite 32 der Wandung 30 verläuft, vergleiche Figuren 1, 3, 4 und 5. Bei Drehung der Mischtrommel 18 in zu der Misch-Drehrichtung 70 entgegengesetzter Drehrichtung können Reste von fertig beschichteten Tabletten mittels der Erhöhung 84 aus dem Innenraum 24 herausgefördert und über die Öffnung 38 der Begrenzungsfläche 35 entnommen werden. Dieser Entnahmevorgang kann mit zusätzlichen Schaufeln unterstützt werden, die an der Innenseite der Begrenzungsfläche 35 vorgehalten sind.

Die Durchmischung der Tablettencharge 28 und der Verlauf der Tabletten-Transportpfade 80, 82 kann insbesondere auch durch nachfolgende Parameter beeinflusst werden:
- ein Anstellwinkel 86 eines Mischelements beträgt zwischen 60° und 90°, vergleiche Fig. 4, und/oder
- die Höhe der Mischelemente 34a, 34b (diese Höhen entsprechen den Abständen 66, 68) betragen zwischen 1% und 30% eines Innendurchmessers 88 der Wandung 30, vergleiche Fig. 6, und/oder
- die Mischelemente 34a, 34b sind bezogen auf eine zu der Drehachse 20 parallele Achse um einen Winkel 90, der zwischen 15° und 60° beträgt, geneigt angeordnet, vergleiche Fig. 5, und/oder
- der Innendurchmesser 88 der Wandung 30 beträgt mindestens das 0,4-fache einer Breite 92 der Wandung 30, vergleiche Fig. 6.

## Patentansprüche

1. Trommelcoatervorrichtung (10) zur Beschichtung von Tabletten, umfassend eine um eine Drehachse (20) drehbare Mischtrommel (18) mit einem Innenraum (24) zur Anordnung einer zu beschichtenden Tablettencharge (28), ferner umfassend eine Sprühvorrichtung (26) zum Einbringen eines Beschichtungsmaterials in den Innenraum (24), wobei die Mischtrommel (18) eine hohlzylindrische, perforierte Wandung (30) aufweist, welche zumindest einen Teil des Innenraums (24) der Mischtrommel (18) begrenzt, wobei an der dem Innenraum (24) zugewandten Innenseite (32) der Wandung (30) Mischelemente zur Durchmischung der Tabletten einer Tablettencharge (28) angeordnet sind, **dadurch gekennzeichnet, dass** Paare (36) von Mischelementen (34a, 34b) zueinander V-förmig ausgerichtete Schenkel bilden, wobei sich der Abstand der Schenkel eines Paars (36) von einem längs der Drehachse (20) gesehen zentralen Ringbereich (38) der Wandung (30) in Richtung auf zu dem zentralen Ringbereich (38) benachbarte seitliche Ringbereiche (40, 42) erweitert.

2. Trommelcoatervorrichtung (10) nach Anspruch 1, **dadurch gekennzeichnet, dass** die in dem zentralen Ringbereich (38) angeordneten Enden (44, 46) der Schenkel zumindest eines Paars (36) zueinander beabstandet sind.

3. Trommelcoatervorrichtung (10) nach einem der vorstehenden Ansprüche, **dadurch gekennzeichnet, dass** ein Schenkel oder beide Schenkel zumindest eines Paars (36) fragmentiert ist oder sind und längs einer Schenkelachse gesehen mindestens zwei zueinander beabstandete Mischelemente (34a, 48a) aufweist oder aufweisen.

4. Trommelcoatervorrichtung (10) nach einem der vorstehenden Ansprüche, **dadurch gekennzeichnet, dass** die Mischelemente (34a, 34b) oder eine Teilmenge von Mischelementen zumindest eines Paars (36) jeweils eine der Drehachse (20) zugewandte, relativ zu der Wandung geneigte Mischkante (64a, 64b) aufweisen.

5. Trommelcoatervorrichtung (10) nach Anspruch 4, **dadurch gekennzeichnet, dass** die Mischkante (64a, 64b) - von dem zentralen Ringbereich (38) in Richtung eines seitlichen Ringbereichs (40, 42) gesehen - entlang ihres Verlaufs einen zu der Wandung (30) zunehmend größeren Abstand (66) aufweist.

6. Trommelcoatervorrichtung (10) nach einem der vorstehenden Ansprüche, **dadurch gekennzeichnet, dass** ein Anteil von mindestens 10% und/oder höchstens 75% des Umfangs (54) der Innenseite (32) der Wandung (30) von Mischelementen (34a, 34b) überdeckt ist.

7. Trommelcoatervorrichtung (10) nach einem der vorstehenden Ansprüche, **dadurch gekennzeichnet, dass** die Mischelemente (34a, 34b) relativ zu der Innenseite (32) der Wandung (30) einen Anstellwinkel (86) aufweisen, der zwischen 60° und 90° beträgt.

8. Trommelcoatervorrichtung (10) nach einem der vorstehenden Ansprüche, **dadurch gekennzeichnet, dass** die Mischelemente (34a, 34b) eine Höhe aufweisen, welche zwischen 1% und 30% eines Innendurchmessers (88) der Wandung (30) beträgt.

9. Trommelcoatervorrichtung (10) nach einem der vorstehenden Ansprüche, **dadurch gekennzeichnet, dass** die Mischelemente (34a, 34b) bezogen auf eine zu der Drehachse (20) parallele Achse um einen Winkel (90) geneigt angeordnet sind, der zwischen 15° und 60° beträgt.

10. Trommelcoatervorrichtung (10) nach einem der vorstehenden Ansprüche, **dadurch gekennzeichnet, dass** der Innendurchmesser (88) der Wandung (30) mindestens das 0,4-fache der Breite (92) der Wandung (30) beträgt.
